# EUROPÄISCHE PATENTSCHRIFT

(11) **EP 0 456 172 B1**
(45) Veröffentlichungstag und Bekanntmachung des Hinweises auf die Patenterteilung: **05.04.1995**
(21) Anmeldenummer: 91107358.3
(22) Anmeldetag: 07.05.1991
(51) Int. Cl.: H02H 5/04, H02H 7/085

(54) **Ein- oder mehrpoliges Motorschutzrelais oder Überstromrelais**
Single pole or multipole relay for motor protection or overcurrent protection
Relais de protection de moteur ou relais de surintensité unipolaire ou multipolaire

(30) Priorität: 08.05.1990 DE 4014629
(43) Veröffentlichungstag der Anmeldung: 13.11.1991
(73) Patentinhaber: ABB PATENT GmbH, 68309 Mannheim (DE)
(72) Erfinder: Hoyer, Peter, Dr., W-6834 Ketsch (DE)
(74) Vertreter: Rupprecht, Klaus, Dipl.-Ing.

(56) Entgegenhaltungen:
- EP-A- 0 346 262
- CH-A- 449 105
- DE-A- 2 117 639
- DE-B- 2 850 860

## Beschreibung

Die Erfindung betrifft ein Schutzrelais nach dem Oberbegriff des Anspruches 1.

Bei bekannten konventionellen thermischen Schutzrelais, häufig auch als Thermorelais oder als Motorschutzrelais bezeichnet, erwärmt der fließende elektrische Strom ein Bimetallelement, und zwar durch direkte oder indirekte Beheizung dieses Bimetallelementes. Dieses Bimetall bildet, da es selbst eine Aufheizzeit benötigt und Wärme speichern kann, einen Temperaturverlauf während der Erwärmungsphase nach, der dem Verhalten von Elektromotoren (um bei diesem Anwendungsbeispiel zu bleiben) sehr ähnlich ist, so daß dieses Bimetall außer einer Schaltfunktion auch eine Abbildungs- und Gedächtnisfunktion in Bezug auf den überwachten Elektromotor hat. Schutzrelais mit solchen Bimetallelementen sind in ihrer Herstellung relativ aufwendig und auch platzaufwendig, insbesondere dann, wenn sie für die Überwachung größerer Stromstärken ausgelegt sind. Bei zwei- oder mehrpoligen Schutzrelais kommt noch hinzu, daß die einzelnen, jeder Phase zugeordneten Bimetallelemente über präzise Hebelgestänge oder dgl. miteinander verbunden sein müssen, um beim Auftreten eines Überstromes bei nur einer Phase auch die übrigen Phasen gleichzeitig mit der überlasteten Phase abzuschalten. Noch aufwendiger ist die erforderliche Hebelkonstruktion, wenn das Schutzrelais gleichzeitig die Funktion eines Phasenausfallschutzes erfüllen soll.

Da die Ausbiegung eines Thermobimetalles durch Wärme bewirkt wird, sind Auslöser in Motorschutzschaltern auch temperaturabhängig. Daher ist es erforderlich, die Auslöser mit einer Temperaturkompensation zu versehen.

In den letzten Jahren sind auch sogenannte elektronische Schutzrelais bekannt geworden, bei denen die Nachbildung der Motor- bzw. Leitungstemperatur auf elektronischem Wege mit mehr oder weniger Erfolg erzielt wird. Hierbei handelt es sich um komplizierte Schaltungen mit elektrischen Speicherelementen, wie z. B. Kondensatoren, und diversen anderen zugehörigen analogen Schaltelementen. Es gibt auch Schutzrelais mit digitalen Schaltungen, die durch Zählen oder - in komfortablerer Form - mit Computerprogrammen die Motor- bzw. Leitungserwärmung nachbilden. Die bisher bekannt gewordenen elektronischen Schutzrelais sind in ihrer Herstellung insgesamt recht aufwendig und somit teuer und bedürfen teilweise zusätzlicher Organe oder einer gesonderten Stromversorgung mit speziellen Spannungen und/oder Frequenzen.

Aus dem DE-GM 18 36 249 ist eine Schaltungsanordnung bekannt geworden, bei der Halbleiterkörper mit temperaturabhängigem Widerstand in Wärmekontakt mit den zu uberwachenden elektrischen Phasenleitern gebracht werden. Wenn sich in einem der Leiter eine Temperaturerhöhung ergibt, bewirkt dies eine Veränderung des Widerstandsbeiwertes des temperaturabhängigen Widerstandes, wodurch ein Relais angesteuert wird, welches das Schutzrelais ausschaltet. Eine Temperaturkompensation und ein Phasenausfallschutz sind in dem Gebrauchsmuster nicht beschrieben.

Aus der DE-OS 19 51 413 ist eine ähnliche Schaltungsanordnung bekannt, bei der die temperaturabhängigen Widerstände PTC-Widerstände sind. Auch hier ist über eine Temperaturkompensation und einen Phasenausfallschutz nichts ausgesagt.

Auch aus der DE-OS 28 22 010 ist eine Schaltungsanordnung bekannt geworden, bei der lediglich ein Überstrom erfaßt und abgeschaltet wird.

Ein Motorschutzrelais der eingangs genannten Art ist aus der CH-A 449 105 bekannt geworden. Dort ist in die einzelnen Phasenwicklung eines Elektromotors jeweils ein Fühler eingebettet, denen zum Ausgleich von Streuungen, bedingt durch die Herstellung, Widerstände zugeordnet sind. Die Fühler sind als PTC-Widerstände (Widerstände mit positivem Temperaturkoeffizienten) ausgebildet und in Reihe geschaltet. Eine Temperaturkompensation ist bei dieser Anordnung nicht gegeben.

Aus der EP 0 346 262 A ist eine Schutzschaltung bekannt geworden, bei der ein thermischer Schutzwiderstand und ein Heizwiderstand in Reihen- oder Parallelschaltung einander zugeordnet sind. Der thermische Schutzwiderstand ist ein Widerstand mit positivem Temperaturkoeffizienten, so daß bei erhöhter Temperatur, die beispielsweise durch einen Fehler entsteht, durch die Widerstandserhöhung der Stromfluß praktisch unterbrochen wird. Zur Vermeidung von Umgebungstemperatureinflüssen ist dem Schutzwiderstand ein Heizwiderstand zugeordnet, der ebenfalls einen positiven Temperaturkoeffizienten aufweist und dessen Schalttemperatur größer ist als die normale Umgebungstemperatur. Die Widerstände, also der Schutzwiderstand und der Heizwiderstand, sind einander so zugeordnet, daß der Einfluß der Umgebungstemperatur minimiert wird; eine Temperaturkompensation wird dadurch allerdings nicht erreicht, da die Verringerung des Umgebungstemperatureinflusses durch Erhöhung der Betriebstemperatur des Schutzwiderstandes durch den Heizwiderstand erreicht wird.

Aufgabe der Erfindung ist es, eine Schaltungsanordnung anzugeben, mit der eine Temperaturkompensation erzielt wird. Zusätzlich soll ein Phasenausfallschutz bewirkt werden, wobei sowohl für die Temperaturkompensation als auch für den Phasenausfallschutz PTC-Widerstände Verwendung finden sollen.

Diese Aufgabe wird erfindungsgemäß durch die kennzeichnenden Merkmale des Anspruches 1 gelöst.

Der zusätzliche, zweite temperaturabhängige Widerstand, der in Reihe zum Heizwiderstand im zu überwachenden Phasenleiter angeordnet ist, hat mit dem ersten temperaturabhängigen Widerstand im Schaltkreis des Schaltorganes praktisch nichts zu tun, sondern dient einer Temperaturkompensation, d. h. einer Anpassung des Schutzrelais an die Umgebungs- oder Raumtemperatur. Diese Funktion erfüllt der zweite temperaturabhängige Widerstand wie folgt:

Bei normaler, verhältnismäßig kühler Umgebungstemperatur fließt ein wesentlicher Anteil des Phasenstroms über den Heizwiderstand und den in Reihe zu diesem vor- bzw. nachgeschalteten zweiten temperaturabhängigen Widerstand. Der übrige Anteil des Phasenstroms fließt über den Parallelwiderstand. Bei zunehmender Umgebungs- bzw. Raumtemperatur wird der in Reihe mit dem Heizwiderstand geschaltete zweite temperaturabhängige Widerstand in Gestalt eines Kaltleiters seinen Widerstandswert vergrößern, was eine entsprechende Verringerung der Heizleistung des Heizwiderstandes und somit eine Verringerung der Wärmabgabe an den im Stromkreis für das Schaltorgan gelegenen ersten temperaturabhängigen Widerstand zur Folge hat. Gleichzeitig wird sich der Stromfluß über den Parallelwiderstand vergrößern. Auf diese Weise läßt sich eine Temperaturkompensation bezüglich der Umgebungs- bzw. Raumtemperatur realisieren. Es versteht sich von selbst, daß die einzelnen Widerstandselemente recht genau aufeinander abgestimmt werden müssen, was aber nur einer einmaligen Festlegung bedarf.

Eine weitere Ausgestaltung der Erfindung ist dem Anspruch 2 zu entnehmen.

Hierdurch wird ein Phasenausfallschutz wie folgt erzielt:

Dadurch, daß die zweiten temperaturabhängigen Widerstände (auch zusätzliche temperaturabhängie Widerstände genannt) dem erwärmenden Einfluß der Heizwiderstände der beiden anderen Phasenleiter ausgesetzt sind, läßt sich ein Phasenausfallschutz bewerkstelligen. Setzt man bei gleichmäßiger Belastung aller drei Phasenleiter voraus, daß der Erwärmungseinfluß auf alle Widerstände gleich groß ist, so kann man das Verhalten aller drei Zweige, d. h. aller drei Phasen als gleich oder symmetrisch bezeichnen. Fällt aber eine Phase aus, führt also ein Leiter keinen oder weniger Strom, so bedeutet dies, daß die in den anderen Phasen befindlichen zweiten temperaturabhängigen Widerstände, die gleichzeitig der Temperaturkompensation dienen, weniger erwärmt werden. In diesem Fall haben sie einen niedrigeren Widerstandswert, was bewirkt, daß über die anderen Phasenleiter mit den Heizwiderständen und den zweiten temperaturabhängigen Widerständen ein höherer Strom fließt als wenn der zweite temperaturabhängige Widerstand des einen "ausgefallenen" Phasenleiters jeweils normal, d. h. etwas mehr erwärmt wäre. Dies bewirkt eine schnellere Aufheizung und höhere Temperatur an den Heizwiderständen in den strombelasteten Phasenleitern. Dies führt aber weiterhin zu einer schnelleren Erwärmung der entsprechenden diese belasteten Phasenleitern zugeordneten ersten temperaturabhängigen Widerstände und somit zu einer schnelleren Auslösung.

Weitere vorteilhafte Ausgestaltungen und Verbesserungen der Erfindung sind den weiteren Unteransprüchen zu entnehmen.

Weitere Gestaltungsmöglichkeiten der soeben erläuterten Temperaturkompensation und des Phasenausfallschutzes beziehen sich auf den Parallelwiderstand. Für von vornherein festliegende Strom- und Stromgrenzwerte wird vorgeschlagen, als Parallelwiderstand einen solchen mit einem festen Widerstandswert zu wählen. Abweichend hiervon kann aber auch vorgesehen werden, als Parallelwiderstand einen solchen mit einem manuell einstellbaren Widerstandswert vorzusehen. Hierdurch ist es möglich, ein und dasselbe Schutzrelais für ein größeres Spektrum von Ansprechwerten, d. h. für unterschiedliche Stromgrenzwerte zu verwenden.

Eine noch weitergehende Ausgestaltungsmöglichkeit besteht darin, in diesem Parallelzweig sowohl einen Widerstand mit einem festen Widerstandswert, als auch - hintereinandergeschaltet - einen solchen mit einem manuell einstellbaren Widerstandswert vorzusehen. Hierdurch ist, innerhalb eines bestimmten Spektrums, eine genauere Einstellung unterschiedlicher Grenz- bzw. Ansprechwerte zu erzielen.

Als temperaturabhängiger Widerstand kommen - bei jeweils entsprechendem und angepaßtem Schaltungsaufbau - solche mit positiver oder negativer Widerstandscharakteristik zur Anwendung.

Anhand der Zeichnung, in der zwei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Figur 1: eine Schaltungsanordnung lediglich zur Temperaturkompensation, die gleichzeitig auch als Phasenschutzschaltung benutzt werden kann, und
- Figur 2: eine Schaltungsanordnung mit drei Phasenleitern, und zugehörigen ersten temperaturabhängigen Widerständen.

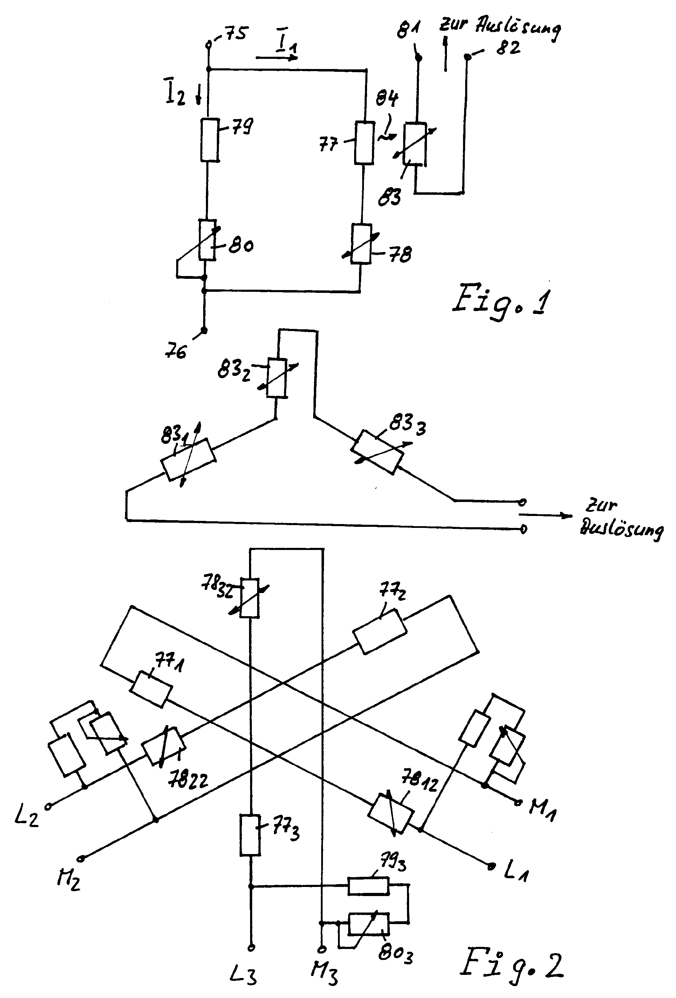

Die Figur 1 veranschaulicht eine erfindungsgemäße Schaltungsanordnung. Zur Spannungsversorgung eines nicht näher angedeuteten Verbrauchers mit der Netzspannung einer Phase wird diese einer stromzugangsseitigen Anschlußstelle 75 an einem Schutzrelais der zur Rede stehenden Art zugeführt. Eine stromabgangsseitige Anschlußstelle 76 ist - über einen entsprechenden Leitungsstrang - mit dem zu versorgenden Verbraucher verbunden. Der Strompfad zwischen der stromzugangsseitigen Anschlußstelle 75 und der stromabgangsseitigen Anschlußstelle 76 teilt sich in zwei parallel zueinander verlaufende Zweige auf. In dem einen dieser Zweige sind ein Heizwiderstand 77 sowie in Reihe hierzu ein zweiter temperaturabhängiger Widerstand 78 in Gestalt eines Kaltleiters angeordnet. In dem anderen, parallel hierzu verlaufenden Zweig des Strompfades sind zwei Parallelwiderstände 79 und 80 angeordnet, wobei der Parallelwiderstand 79 einen festen Widerstandswert und der Parallelwiderstand 80 hingegen einen (manuell) einstellbaren Widerstandswert aufweist.

Außerdem enthält diese Schaltung zwei weitere Anschlußstellen 81 und 82, die an einen (dieser Darstellung nicht zu entnehmenden) gesonderten Schaltkreis für einen (insbesondere elektromagnetisch betätigbaren) Schalterantrieb verbunden werden und diesen gesonderten Schaltkreis schließen. Innerhalb des Strompfades von der Anschlußstelle 81 zur Anschlußstelle 82 ist ein erster temperaturabhängiger Widerstand 83 angeordnet, beispielsweise ein Kaltleiter. Dieser erste temperaturabhängige Widerstand 83 wird vom Heizwiderstand 77 temperaturmäßig beeinflußt, was durch den Pfeil 84 symbolisiert werden soll.

Durch eine derartige Schaltung wird folgende Funktion erzielt: Im Betriebsfalle für den erwähnten Verbraucher fließt über den Strompfad von der stromzugangsseitigen Anschlußstelle 75 zur stromabgangsseitigen Anschlußstelle 76 ein Strom I₁, und zwar im wesentlichen über den Heizwiderstand 77 und den temperaturabhängigen Widerstand 78. Der Teilstrom I₂ über den Parallelzweig mit den Parallelwiderständen 79 und 80 ist nur gering, wobei vorausgesetzt wird, daß die Raum- bzw. Umgebungstemperatur, die das Schutzrelais umgibt, niedrig ist. Mit zunehmender Umgebungstemperatur verändert sich der Widerstandswert des einen Kaltleiter darstellenden zweiten temperaturabhängigen Widerstandes 78, so daß dessen Widerstandswert ansteigt. Dieser temperaturabhängige Widerstand 78 wird in erster Linie nur von der Umgebungstemperatur beeinflußt, nicht oder höchstens unwesentlich hingegen von dem Heizwiderstand 77. Mit ansteigender Umgebungstemperatur und somit ansteigendem Widerstandswert des temperaturabhängigen Widerstandes 78 verändern sich nun aber die Stromanteile, die über die beiden genannten, parallel zueinander verlaufenden Stromzweige fließen, d. h. der über die Parallelwiderstände 79 und 80 fließende Stromanteil vergrößert sich, und der Heizwiderstand 77 wird bezüglich seiner Strombelastung entlastet. Hierdurch wird der Effekt einer Temperaturkompensation erzielt, d. h. es wird vermieden, daß sich bei einer hohen Umgebungstemperatur der temperaturabhängige Widerstand 83 im Stromkreis für den Schalterantrieb so stark erwärmt, daß eine Abschaltung des Verbrauchers erfolgt, obwohl keine Überlastung bzw. kein Überstrom in dieser Phase ansteht.

Ein weiterer Effekt wird durch den (manuell) verstellbaren Parallelwiderstand 80 erzielt, in dem es dieser ermöglicht, ein und dasselbe Schutzrelais für unterschiedliche Ansprechwerte zu verwenden. Je nach Einstellung dieses Parallelwiderstandes 80 sind nämlich die Stromanteile, die über die einzelnen Parallelzweige fließen, veränderbar, so daß ein Ansprechen des Schutzrelais bei unterschiedlichen Stromstärken erfolgt. Es versteht sich von selbst, daß die einzelnen, in dieser Schaltung enthaltenden Widerstände aufeinander abgestimmt werden müssen, was aber nur einer einmaligen Festlegung bedarf.

Selbstverständlich kann diese Schaltung nach Figur 1 auch in einer dreiphasigen Anordnung eingesetzt werden.

Wenn man diese in der Figur 1 dargestellte Schaltungsanordnung für insgesamt drei Phasenleiter anwendet und die zweiten temperaturabhängigen Widerstände 78 der einzelnen Phasenleiter jeweils dem erwärmenden Einfluß der Heizwiderstände 77 der anderen beiden Phasenleiter aussetzt, so ergibt dies einen Phasenausfallschutz.

Wenn eine gleichmäßige Belastung aller drei Leitersysteme dadurch erfolgt, daß in allen drei Phasenleitern der gleiche Strom fließt, dann kann man das Verhalten aller drei Phasenleiter und aller drei Schaltungsanordnungen als gleich oder symmetrisch bezeichnen. Fällt aber eine Phase aus, führt also einer der Leiter keinen oder weniger Strom, so bedeutet dies, daß die jeweiligen Widerstände 78 derjenigen Phasenleitersysteme, die noch den normalen Nennstrom führen, weniger erwärmt werden. Dadurch besitzen die Wiederstände 78 einen geringeren Widerstandswert, weswegen über den Parallelzweig mit den beiden Widerständen 77 und 78 ein höherer Strom fließt, gegenüber dem Fall, wenn der bzw. die Widerstände 78 stärker erwärmt wären. Dadurch wird auch der jeweilige Heizwiderstand 77 stärker auf eine höhere Temperatur erwärmt, so daß die diesen benachbarten Widerstände 88 schneller aufgeheizt werden, so daß deren Widerstandsänderung schneller erfolgt. Dies führt schlußendlich zu einer schnelleren Auslösung.

Die Figur 2 zeigt eine solche Schaltungsanordnung gemäß Figur 1 in einem dreiphasigen Netz. Man erkennt die drei Phasenleiter L₁, M₁; L₂, M₂; L₃, M₃. Beispielsweise in dem Phasenleitersystem L₃, M₃ befindet sich in Reihe ein Heizwiderstand 77₃ und ein zweiter temperaturabhängiger Widerstand 78₃₂. Parallel zu den beiden Widerständen 77₃ und 78₃₂ ist ein fester Widerstand 79₃ und ein manuell verstellbarer Widerstand 80₃ geschaltet.

Der Heizwiderstand 77₃ befindet sich in räumlicher Nähe zu dem in Reihe zu dem Heizwiderstand 77₁ in dem Phasenleitersystem L₁, M₁, befindlichen zweiten temperaturabhängigen Widerstand 78₁₂ und dem in Reihe zu dem Heizwiderstand 77₂ geschalteten zweiten temperaturabhängigen Widerstand 78₂₂ in dem Phasenleitersystem L₂, M₂. Diese zweiten temperaturabhängigen Widerstände 78₁₂ und 78₂₂ werden damit von dem Heizwiderstand 77₃ erwärmt. Die Heizwiderstände 77₁ und 77₂ erwärmen jeweils die zweiten temperaturabhängigen Widerstände jeweils der beiden anderen Phasenleitersysteme in ähnlicher Weise. Darüberhinaus sind den Heizwiderständen 77₁, 77₂, 77₃ die in der Figur 2 als "zur Auslösung" führend dargestellten ersten temperaturabhängigen Widerstände 83₁, 83₂ und 83₃ zugeordnet. Damit erwärmt beispielsweise der Heizwiderstand 77₁ den ersten temperaturabhängigen Widerstand 83₂ und die beiden zweiten temperaturabhängigen Widerstände 78₂₂ und 78₃₂, usw.

Diese Anordnung bewirkt einen Phasenausfallschutz. Wenn nämlich beispielsweise in dem Phasenleitersystem L₁, M₁ kein oder ein gegenüber dem Betriebszustand geringerer Strom fließt, dann werden sich die dem Heizwiderstand 77₁ zugeordneten und von diesem erwärmten zweiten temperaturabhängigen Widerstände 78₂₂ und 78₃₂ weniger erwärmen, so daß durch das Phasenleitersystem L₂, M₂ und L₃ und M₃ ein höherer Strom fließt, wodurch die in diesen Phasenleitersystemen L₂, M₂; L₃, M₃ befindlichen Heizwiderstände 77₂, 77₃ stärker aufgeheizt werden, so daß sich der Widerstandswert der beiden ersten temperaturabhängigen Widerstände 83₂ und 83₃ verändert, wodurch das Schaltorgan (nicht dargestellt), in dessen Stromkreis sich die ersten temperaturabhängigen Widerstände 83₁, 83₂ und 83₃ befinden, angesteuert und das Schutzrelais betätigt wird.

## Patentansprüche

1. Mehrpoliges Motorschutzrelais mit wenigstens einem auf thermische Einflüsse reagierenden thermischen Organ, welches zur Erfüllung einer erwarteten Schutzfunktion ein Ansprechen des Schutzrelais bewirkt, mit einer der Anzahl der zu überwachenden Phasenleiter entsprechenden Anzahl von Anschlüssen, mit jeweils einem jedem Phasenleiter zugeordneten, ersten temperaturabhängigen Widerstand (83), der mit einem Schaltorgan derart zusammenwirkt, daß im Falle eines einen Grenzwert überschreitenden Überstromes in einem Phasenleiter das Schutzrelais zum Ansprechen gebracht wird, dadurch gekennzeichnet, daß in jedem Phasenleiter ein mit einem von der Strombelastung weitgehend unabhängigen Widerstandswert und in räumlicher Nähe zu dem jeweiligen ersten temperaturabhängigen Widerstand (83) befindlicher Heizwiderstand (77, 77₁, 77₂, 77₃) angeordnet ist, daß jedem der Heizwiderstände (77, 77₁, 77₂, 77₃) ein zweiter temperaturabhängiger Widerstand (78, 78₁₂; 78₂₂, 78₃₂) in Reihe zugeordnet ist, welcher die Funktion einer Temperaturkompensation erfüllt, und daß diesen beiden im Schaltkreis jedes Phasenleiters befindlichen Widerständen (77, 78) wenigstens ein ggf. verstellbarer, parallel dazuliegender Widerstand (79, 80) zugeordnet ist.

2. Motorschutzrelais nach Anspruch 1, dadurch gekennzeichnet, daß der Heizwiderstand eines Phasenleiters jeweils die zweiten temperaturabhängigen Widerstände (78₂) der beiden anderen Phasenleiter erwärmt.

3. Motorschutzschrelais nach einem der Ansprüche 1 und 2, dadurch gekennzeichnet, daß der den beiden im Schaltkreis jedes Phasenleiters gelegenen Widerständen, nämlich dem Heizwiderstand (77) und dem zweiten temperaturabhängigen Widerstand (78) zugeordnete Parallelwiderstand (79) ein solcher mit einem festen Widerstandswert ist.

4. Motorschutzrelais nach Anspruch 3, dadurch gekennzeichnet, daß der den beiden im Schaltkreis jedes Phasenleiters gelegenen Widerständen, nämlich dem Heizwiderstand (77) und dem zweiten temperaturabhängigen Widerstand (78) zugeordnete Parallelwiderstand (80) ein solcher mit einem manuell einstellbaren Widerstandswert ist.

5. Motorschutzrelais nach Anspruch 2, dadurch gekennzeichnet, daß der den beiden im Schaltkreis jedes Phasenleiters gelegenen Widerständen, nämlich dem Heizwiderstand (77) und dem zweiten temperaturabhängigen Widerstand (78) zugeordnete Parallelwiderstand aus wenigstens zwei Teilwiderständen zusammengesetzt ist, von denen wenigstens einer (79) mit einem (ausgewählten) festen Widerstandswert und wenigstens ein anderer (80) einen manuell verstellbaren Widerstandswert aufweist.

6. Motorschutzrelais nach einem der vorherigen Ansprüche, dadurch gekennzeichnet, daß die Parallelschaltungen der Heizwiderstände (77), zweiten temperaturabhängigen Widerstände (78) und Parallelwiderstände (79, 80) auf einer Seite einer Leiterplatte und die ersten temperaturabhängigen Widerstände (83) in räumlicher Nachbarschaft zu den Heizwiderständen (77) auf der anderen Seite der Leiterplatte angeordnet sind.

## Claims

1. Multipole motor protective relay having at least one thermal element which reacts to thermal influences and effects a response of the protective relay for the purpose of fulfilling an expected protective function, having a number of terminals which corresponds to the number of phase conductors to be monitored, and having respectively one first temperature-dependent resistor (83) which is assigned to each phase conductor and cooperates with a switching element in such a way that the protective relay is caused to respond in the case of an overcurrent in a phase conductor which exceeds a limiting value, characterized in that a heating resistor (77, 77₁, 77₂, 77₃) which has a resistance value largely independent of the current load and is located in the spatial vicinity of the respective first temperature-dependent resistor (83) is arranged in each phase conductor, in that each of the heating resistors (77, 77₁, 77₂, 77₃) is assigned in series a second temperature-dependent resistor (78, 78₁₂; 78₂₂, 78₃₂) which fulfils the function of temperature compensation, and in that these two resistors (77,78) located in the circuit of each phase conductor are assigned at least one, possibly adjustable, resistor (79, 80) situated in parallel therewith.

2. Motor protective relay according to Claim 1, characterized in that the heating resistor of one phase conductor respectively heats the second temperature-dependent resistors (78₂) of the two other phase conductors.

3. Motor protective relay according to one of Claims 1 and 2, characterized in that the shunt resistor (79) assigned to the two resistors situated in the circuit of each phase conductor, specifically the heating resistor (77) and the second temperature-dependent resistor (78), is one with a fixed resistance value.

4. Motor protective relay according to Claim 3, characterized in that the shunt resistor (80) assigned to the two resistors situated in the circuit of each phase conductor, specifically the heating resistor (77) and the second temperature-dependent resistor (78) is one with a manually adjustable resistance value.

5. Motor protective relay according to Claim 2, characterized in that shunt resistor assigned to the two resistors situated in the circuit of each phase conductor, specifically the heating resistor (77) and the second temperature-dependent resistor (78) is composed of at least two component resistors of which at least one (79) has a (selected) fixed resistance value and at least one other (80) has a manually adjustable resistance value.

6. Motor protective relay according to one of the preceding claims, characterized in that the shunt connections of the heating resistors (77), the second temperature-dependent resistors (78) and shunt resistors (79, 80) are arranged on one side of a printed circuit board and the first temperature-dependent resistors (83) are arranged in the spatial vicinity of the heating resistors (77) on the other side of the printed circuit board.

## Revendications

1. Relais multipolaire de protection de moteurs comportant au moins un élément thermique qui réagit aux influences thermiques et déclenche une réaction du relais de protection aux fins de remplir une fonction de protection souhaitée, des connexions en nombre égal au nombre de conducteurs de phase à surveiller, une première thermistance (83) associée à chacun des conducteurs de phase, laquelle thermistance coopère avec un organe de commutation de manière telle qu'en cas de surintensité dans un conducteur de phase supérieure à une valeur seuil, le relais de protection déclenche, caractérisé par le fait qu'une résistance de chauffage (77, 77₁, 77₂, 77₃) dont la valeur ohmique est dans une large mesure indépendante de la charge électrique et qui est disposée dans l'espace à proximité de la première thermistance (83) correspondante est insérée dans chaque conducteur de phase, par le fait qu'une deuxième thermistance (78, 78₁₂, 78₂₂, 78₃₂) est associée en série à chacune des résistance de chauffage (77, 77₁, 77₂, 77₃) et assume la fonction de compensation de la température et par le fait qu'à ces deux résistances (77, 78) placées dans le circuit de chacun des conducteurs de phase est associée au moins une résistance (79, 80) éventuellement réglable, qui est branchée en parallèle avec lesdites résistances.

2. Relais de protection de moteurs selon la revendication 1, caractérisé par le fait que la résistance de chauffage d'un conducteur de phase réchauffe chaque fois la deuxième thermistance (78₂) des deux autres conducteurs de phase.

3. Relais de protection de moteurs selon l'une des revendications 1 et 2, caractérisé par le fait que la résistance parallèle (79) associée aux deux résistances placées dans le circuit de commutation de chaque conducteur de phase, à savoir à la résistance de chauffage (77) et à la deuxième thermistance (78), est une résistance fixe.

4. Relais de protection de moteurs selon la revendication 3, caractérisé par le fait que la résistance parallèle (80) associée aux deux résistances placées dans le circuit de commutation de chaque conducteur de phase, à savoir à la résistance de chauffage (77) et à la deuxième thermistance (78), est une résistance dont la valeur peut être réglée manuellement.

5. Relais de protection de moteurs selon la revendication 2, caractérisé par le fait que la résistance parallèle associée aux deux résistances placées dans le circuit de commutation de chaque conducteur de phase, à savoir à la résistance de chauffage (77) et à la deuxième thermistance (78), se compose d'au moins deux résistances partielles parmi lesquelles une résistance (79) au moins présente une valeur fixe (sélectionnée) et au moins une autre résistance (80) présente une valeur ohmique réglable manuellement.

6. Relais de protection de moteurs selon l'une des revendications précédentes, caractérisé par le fait que les branchements en parallèle des résistances de chauffage (77), des deuxièmes thermistances (78) et des résistances parallèles (79, 80) sont disposés sur une face d'une carte à circuit imprimé et les premières thermistances (83) sont disposées dans l'espace, dans le voisinage des résistances de chauffage (77), sur l'autre face de la carte à circuit imprimé.
